(19) Europäisches Patentamt
European Patent Office
Office européen des brevets

(11) **EP 2 345 202 B1**

(12) **FASCICULE DE BREVET EUROPEEN**

(45) Date de publication et mention
de la délivrance du brevet:
**05.04.2017 Bulletin 2017/14**

(21) Numéro de dépôt: **09755931.4**

(22) Date de dépôt: **21.10.2009**

(51) Int Cl.:
*H04L 9/32* *(2006.01)*        *H04L 9/08* *(2006.01)*

(86) Numéro de dépôt international:
**PCT/FR2009/001234**

(87) Numéro de publication internationale:
**WO 2010/046565 (29.04.2010 Gazette 2010/17)**

(54) **PROCÉDÉ DE SIGNATURE NUMÉRIQUE EN DEUX ÉTAPES**

DIGITALES SIGNATURVERFAHREN IN ZWEI SCHRITTEN

DIGITAL SIGNATURE METHOD IN TWO STEPS

(84) Etats contractants désignés:
**AT BE BG CH CY CZ DE DK EE ES FI FR GB GR
HR HU IE IS IT LI LT LU LV MC MK MT NL NO PL
PT RO SE SI SK SM TR**

(30) Priorité: **22.10.2008 FR 0805870**

(43) Date de publication de la demande:
**20.07.2011 Bulletin 2011/29**

(73) Titulaire: **Paycool International Ltd.
Hong Kong S.A.R. (CN)**

(72) Inventeurs:
• **BARTHELEMY, Serge
F-34000 Montpellier (FR)**
• **THEIBLEMONT, Jacques
F-34130 Mauguio (FR)**

(74) Mandataire: **Nicolle, Olivier
Ipon Global
29, boulevard Georges Seurat
92200 Neuilly-sur-Seine (FR)**

(56) Documents cités:
**GB-A- 2 337 145     US-A1- 2007 208 944**

• **PKCS NBR.1 V2.0: RSA CRYPTOGRAPHY
STANDARD, XX, XX, 25 mars 1999 (1999-03-25),
pages 1-30, XP002973232 cité dans la demande**
• **XUHUA DING ET AL: "Experimenting with
server-aided signatures" PROCEEDINGS OF THE
SYMPOSIUM ON NETWORK AND DISTRIBUTED
SYSTEM SECURITY, XX, XX, 8 février 2002
(2002-02-08), pages 1-15, XP002265339**
• **YONG-ZHONG HE ET AL: "Server-Aided Digital
Signature Protocol Based on Password"
SECURITY TECHNOLOGY, 2005. CCST '05. 39TH
ANNUAL 2005 INTERNATIONAL CA RNAHAN
CONFERENCE ON LAS PALMOS, SPAIN 11-14
OCT. 2005, PISCATAWAY, NJ, USA,IEEE, 11
octobre 2005 (2005-10-11), pages 1-4,
XP010894029 ISBN: 978-0-7803-9245-8**

Il est rappelé que: Dans un délai de neuf mois à compter de la publication de la mention de la délivrance du brevet
européen au Bulletin européen des brevets, toute personne peut faire opposition à ce brevet auprès de l'Office européen
des brevets, conformément au règlement d'exécution. L'opposition n'est réputée formée qu'après le paiement de la taxe
d'opposition. (Art. 99(1) Convention sur le brevet européen).

## Description

La présente invention concerne un procédé de signature numérique utilisant un schéma de signatures multiples à dé publique et faisant intervenir un serveur tiers de confiance dans le but de protéger la clé privée du signataire.

## Problématique et État de la Technique

La signature numérique est un mécanisme permettant d'authentifier l'auteur d'un message ou d'un document électronique et de garantir l'intégrité dudit message ou document. Du point de vue juridique, la signature électronique est reconnue dans de nombreux pays et notamment en France, comme une preuve d'engagement d'une personne, au même titre qu'une signature manuscrite. L'état de la technique dans le contexte duquel se situe la présente invention est décrit en relation à des références bibliographiques qui sont indiquées entre crochets ([]) dans le texte, et dont la liste figure à la fin de la présente description.

D'un point de vue technique, la signature numérique met en oeuvre des procédés cryptographiques à clé publique dont les plus répandus sont RSA [4] et DSA [2]. Elle consiste pour le signataire d'un message à effectuer un calcul cryptographique (fonction de signature) sur ce message (ou sur un dérivé de type hachage) à l'aide d'un secret connu de lui seul et appelé dé privée. Le résultat de cette fonction constitue la signature numérique du message. Le receveur de la signature et du message (encore désigné par vérifieur), quant à lui, réalise un calcul cryptographique (une fonction de vérification) sur le message (ou son haché), la signature à l'aide d'une donnée appelée dé publique. Cette fonction de vérification lui indique si la signature reçue est valide ou non. La dé publique est en général librement distribuée sous forme d'un certificat numérique qui permet de l'associer à l'identité du signataire.

Le caractère confidentiel et la protection de la clé privée sont essentiels car dans le cas où celle-ci est compromise par un tiers, celui-ci peut se faire passer pour le détenteur légitime de la clé privée et produire des documents signés au nom de ce dernier et à son insu (ce qui constitue l'usurpation d'identité). La mise en oeuvre d'une solution de signature électronique doit donc s'accompagner de mesures strictes destinées à protéger la dé privée du signataire. La protection de dé privée reste dans la plupart des cas un véritable défi technique, et à ce jour les seules solutions considérées comme fiables sont celles utilisant des moyens matériels spécifiques sécurisés pour le stockage de clé privée, comme par exemple une carte à puce, une dé USB sécurisée, ou une carte mémoire sécurisée. La difficulté liée à cette protection et/ou les moyens nécessaires à celle-ci représentent un véritable frein au déploiement de services en ligne nécessitant une signature électronique, notamment auprès du grand public. Dans d'autres cas, une protection imparfaite de cette clé privée peut fragiliser la sécurité de tels services. Ceci est en particulier le cas quand il s'agit de services destinés au grand public pour lesquels la mise en place de moyens ou de consignes de sécurité strictes s'avèrent difficiles voire impossibles. On peut citer par exemple :

- la signature d'un contrat ou d'un avenant auprès d'un fournisseur de service,

- la réalisation de transactions financières : virements, ordres de bourse...

- l'achat en ligne (commerce électronique),

- les actes administratifs (administration en ligne)...

## État de l'art

On a recensé ci-dessous ici les techniques connues dans l'état de l'art destinées à protéger la clé privée d'un signataire. Ces techniques combinent différents moyens logiciels ou électroniques ainsi que des procédés cryptographiques qui sont liés ou non à l'opération de signature.

## Fichier de Clé Chiffré

La plus répandue de ces techniques consiste à chiffrer la dé privée au moyen d'une dé secrète dérivée d'un mot de passe connu du seul signataire. La clé ainsi chiffrée est stockée dans un fichier conjointement avec le certificat associé. Cette solution est implémentée dans de nombreux logiciels grand public tels les navigateurs internet et les clients de messagerie, en général au travers des standards PKCS#11 [9] et PKCS#5 [8].

Le problème majeur d'une telle solution est que dès lors qu'un attaquant dispose d'un accès, même temporaire, au fichier de clé, il peut tenter une attaque hors ligne par dictionnaire sur la clé privée de la façon suivante:

1) Choix d'une valeur P candidate pour le mot de passe

2) Déchiffrement de la clé privée chiffrée à l'aide de P et obtention d'une clé privée candidate Kpriv.

3) Calcul d'une signature S à l'aide de Kpriv sur un message arbitraire M: S = Sign (Kpriv, M)

4) Fonction de vérification avec en paramètres S, M et la clé publique Kpub: V = Verify (S, M, Kpub)

5) Si V est vrai, alors la clé a été découverte. Dans le cas contraire, l'algorithme reprend à l'étape 1 avec une nouvelle valeur de P.

On notera que dans la pratique, selon l'algorithme de signature utilisé, des moyens beaucoup plus performants d'attaque peuvent exister. Celui décrit ci-dessus est toujours possible quel que soit l'algorithme utilisé.

La sécurité de ce mode de protection repose donc sur la qualité du mot de passe choisi par le signataire pour protéger sa clé privée. Il est de notoriété publique que le choix des mots de passe n'est pas forcement judicieux et que dès lors qu'un mot de passe est trop long ou trop complexe, le réflexe premier d'un utilisateur est de le noter et de la conserver à proximité de son ordinateur personnel. Ce mode de protection ne peut donc pas être considéré comme satisfaisant pour des applications sensibles.

## Carte à Microcircuit

Une autre solution consiste à utiliser un dispositif électronique, tel une carte à microcircuit ou une dé USB pour le stockage de la clé privée et éventuellement le calcul de signature. Là aussi, la clé privée est protégée par un mot de passe ou un code PIN, mais c'est le dispositif électronique qui réalise la vérification de ce mot de passe. La dé privée n'est restituée (ou la signature n'est calculée) que si le mot de passe saisi est correct. Dans le cas inverse, le dispositif comptabilise les tentatives infructueuses de présentation du mot de passe et peut, après un nombre de tentatives donnés (typiquement 3), bloquer l'accès à la clé de signature.

Cette solution est réputée sûre d'autant que les cartes à puce intègrent des dispositifs avancés pour la protection de la mémoire et contre les attaques passives comme l'analyse par signaux SPA ("Simple Power Analysis" en terminologie anglo-saxonne) ou DPA ("Differential Power Analysis" en terminologie anglo-saxonne). L'inconvénient de cette solution est sa difficulté de mise en oeuvre dans le cadre d'applications grand public et les coûts importants qu'elle engendre. Aussi, ce type de solution est aujourd'hui réservé à des applications professionnelles.

## Camouflage Cryptographique

Une troisième solution, objet d'un brevet [1], propose une protection efficace de la dé privée du signataire au moyen d'un procédé appelé camouflage cryptographique. Dans ce procédé, comme dans le premier examiné, la dé privée est stockée chiffrée au moyen d'un mot de passe. Dans le document [1] toutefois, la protection de la dé privée ne dépend pas uniquement de la qualité du mot de passe, lequel peut être d'une taille réduite et aisément mémorisable par le signataire.

La sécurité de ce procédé repose essentiellement sur le fait que:

1) La Clé publique de l'utilisateur n'est pas librement accessible mais distribuée uniquement à un ou plusieurs tiers de confiance, seuls à même de procéder à la vérification d'une signature.

2) La fonction de signature doit être probabiliste, c'est-à-dire qu'à un même message à signer doit pouvoir correspondre un grand nombre de signatures valides.

Moyennant certaines précautions, cette solution permet une protection efficace de la dé privée du signataire. Son principal défaut est qu'elle impose également la protection de la dé publique par les tiers de confiance vérifieurs. Ce mode de fonctionnement n'est pas compatible avec les infrastructures à clé publique actuelles dans lesquelles les dés publiques sont librement distribuées dans des certificats et pour lesquelles quiconque peut vérifier une signature et s'y fier dés lors qu'il fait confiance à l'émetteur du certificat (Autorité de Certification).

## Autres procédés utilisant des signatures numériques

On connaît aussi dans l'état de la technique des procédés divers utilisant des signatures numériques, comme ceux décrits dans les documents [14], [15],[16] ou [17],. Mais ces documents n'adressent pas le problème technique résolu par l'invention, consistant à protéger la dé privée du signataire afin d'éviter une usurpation de son identité. En outre, dans ce type de document, une seule clé privée est utilisée pour une même opération de signature.

Dans [14] et [15], il est prévu de faire circuler des documents signés dans une structure hiérarchique, en ajoutant au niveau du récipiendaire une ou plusieurs contre-signatures numériques à un document déjà signé provenant d'un émetteur, avant de transmettre le document au récipiendaire suivant.

Dans [16], une clé privée unique d'un agent mobile est morcelée entre un certain nombre d'hôtes visités par l'agent mobile, chaque morceau étant utilisé pour calculer une clé partielle, ce qui est l'antithèse de la solution retenue par la présente invention.

Le document [17] présente une solution à un problème technique différent, consistant à contresigner numériquement un document au fur et à mesure de son transfert entre des individus à l'intérieur d'une organisation hiérarchisée. En réponse à ce problème, ce document décrit un système de création et de gestion de certificats enrichis d'une série d'attributs qui définissent l'étendue des pouvoirs et des conditions dans lesquelles un signataire pourra exercer sa signature numérique. Il décrit aussi les méthodes qui permettent de vérifier la validité de la signature numérique et des attributs du signataire. Ce document décrit aussi les méthodes de délégation de certifications au long de la chaine hiérarchique ou de pouvoir.

En revanche, le document [17] ne décrit aucun procédé de création de signature numérique, mais mentionne l'utilisation de signatures numériques par plusieurs acteurs. De même ce document ne mentionne à aucun moment l'existence de deux clés privées pour l'un quelconque des signataires ni le fait que les signatures sont créées en deux étapes utilisant deux dés privées pour un même signataire.

### Buts de l'invention

Un but de l'invention est de proposer un procédé de signature numérique apte à pallier aux inconvénients des procédés ci-dessus correspondants à l'état de la technique. En particulier, un but majeur de l'invention est de proposer un procédé de signature tel que les attaques systématiques ne permettent pas de trouver la dé privée du signataire. Ainsi il devient inutile pour protéger la dé privée du signataire d'avoir recours à des dispositifs de protection matériels spéciaux comme les cartes à microcircuit, dés USB ou autres dispositifs équivalents.

Un autre but de l'invention est de proposer un procédé qui soit compatible avec les principaux schémas de signature à clé publique, notamment RSA.

Un autre but de l'invention est de proposer un dispositif approprié à la mise en oeuvre du procédé de signature numérique selon l'invention.

Ces buts sont atteints par le procédé de signature numérique et par le dispositif associé, tels que décrits plus en détail ci-dessous.

### Résumé de l'invention

L'invention a pour objet un procédé de signature numérique d'un message M par un signataire ayant une identité I et disposant d'un dispositif de signature, ledit procédé utilisant un schéma de cryptographie à dé publique et étant caractérisé en ce que le signataire dispose d'une clé publique $K_p$ et de deux dés privées $K_s$ et $K_c$, la seconde dé privée $K_c$ étant déposée auprès d'un tiers de confiance, et en ce qu'il comporte, pour chaque opération de signature, deux étapes complémentaires réalisées chacune avec une dé privée distincte, à savoir :

- le calcul par le signataire d'une pré-signature $S_s$ du message M à l'aide de sa première clé privée $K_s$, puis la transmission du message M et de la pré-signature $S_s$ au tiers de confiance;

- la vérification par le tiers de confiance de la pré-signature $S_s$, suivie du calcul par le tiers de confiance d'une signature S du message M, à l'aide d'une part de la seconde clé privée $K_c$ du signataire déposée auprès du tiers de confiance, et d'autre part de ladite pré-signature $S_s$ préalablement calculée par le signataire.

Comme des clés sont nécessaires, le procédé comporte, préalablement aux étapes de signature et de vérification de la signature, une étape de génération et de stockage des clés, consistant en :

- la génération par le signataire de sa première clé privée de pré-signature $K_s$ ;

- la génération de la seconde dé privée $K_c$, cette dé étant générée, selon le schéma de cryptographie utilisé, soit par le signataire seul, soit par le tiers de confiance à l'aide d'éléments que lui a transmis le signataire ;

- la génération de la clé publique $K_p$ du signataire, cette clé étant générée, selon le schéma de cryptographie utilisé, soit par le signataire seul, soit par le tiers de confiance à l'aide d'éléments que lui a transmis le signataire ;

Selon l'invention, la pré-signature d'un message M par le signataire comporte les étapes suivantes :

- identification du signataire auprès de son dispositif de signature, à l'aide d'un mot de passe ou d'un code PIN ;

- déchiffrement par le dispositif de signature du signataire du contenu du fichier de clés à l'aide dudit mot de passe ou dudit code PIN, et obtention de la première dé privée $K_s$ ;

- calcul par le dispositif de signature du signataire d'une pré-signature $S_s$ à l'aide de sa première dé privée $K_s$ et transmission au serveur du tiers de confiance de cette pré-signature $S_s$, du message à signer M ou de son haché H(M), et de l'identité I du signataire ;

- récupération par le serveur du tiers de confiance de la seconde dé privée $K_c$ du signataire, à l'aide de l'identité I de celui-ci;

Si la vérification de la pré-signature $S_s$ montre que la pré-signature $S_s$ n'est pas valide, le serveur du tiers de confiance notifie l'erreur au signataire et comptabilise les pré-signatures $S_s$ invalides pour le signataire et, au bout d'un nombre consécutif donné de pré-signatures invalides, bloque l'usage de la signature par le signataire en rejetant toutes ses demandes ultérieures de signature.

Selon une variante avantageuse de l'invention, la pré-signature $S_s$ est calculée en appliquant une fonction cryptographique probabiliste au haché H(M) du message numérique M et à la première dé privée $K_s$ du signataire.

Avantageusement, la valeur de vérification $V_s$ de la pré-signature est calculée en appliquant une fonction de vérification au haché H(M) du message, à la seconde dé privée $K_c$ et à la pré-signature $S_s$.

En outre, le calcul de la signature S par le serveur du tiers de confiance est réalisé par une fonction utilisant la seconde dé privée $K_c$, le haché H(M) du message et la pré-signature $S_s$ reçue du signataire.

Selon un aspect important du procédé selon l'invention, la signature S obtenue pour le message M à l'aide des deux clés privées $K_s$ et $K_c$ du signataire peut être vérifiée par tout tiers connaissant le schéma cryptographique utilisé et disposant de la dé publique $K_P$ du signataire et du message M ou de son haché H(M), sachant que la clé publique $K_P$ du signataire est librement distribuée, notamment à l'aide d'un certificat numérique apte à associer la dé publique $K_p$ à l'identité I du signataire.

**Principe de l'invention :**

Le principe du procédé selon l'invention consiste en un procédé cryptographique de création de signature numérique qui est réalisée, non pas en une, mais en deux étapes, en utilisant non pas une, mais deux clés privées pour un même signataire, la première clé privée étant en possession du signataire et la seconde dé privée étant déposée par le signataire auprès d'un tiers de confiance C.

Le signataire I dispose ainsi de ses deux clés privées et d'une dé publique $KP_I$, qui sont liées entre elles et dont la détermination dépend de l'algorithme cryptographique utilisé.

La signature $S_I(M)$ d'un message M par le signataire I ne peut être obtenue qu'à l'issue d'une combinaison d'une première étape réalisée par le signataire avec sa première clé privée, et d'une deuxième étape réalisée par le tiers de confiance C avec la seconde clé privée du signataire I. Selon l'invention, les deux étapes sont complémentaires et indissociables pour obtenir la signature $S_I(M)$ d'un message M.

En définitive, dans le procédé selon l'invention, le signataire dispose d'une première dé privée $K_s$ stockée sous forme cryptée à l'aide d'un mot de passe ou d'un code PIN. Grâce à cette dé privée $K_s$, le signataire peut pré-signer un message. Le serveur du tiers de confiance dispose d'une seconde dé à caractère privé $K_c$ lui permettant de vérifier les messages pré-signés par le signataire à l'aide de $K_s$, puis, de compléter le processus de signature, de façon que le message pré-signé avec $K_s$ puis avec $K_c$, puisse être vérifié à l'aide de la seule dé publique $K_p$. Cette clé publique $K_p$ peut être librement distribuée, typiquement sous la forme d'un certificat numérique.

**Caractéristiques générales de la Solution**

On décrira plus en détail dans ce qui suit le procédé de signature objet de la présente demande de brevet. Ce procédé permet de garantir la protection de la clé privée du signataire sans recourir à des moyens électroniques spécifiques de type carte à puce ou dé USB, ni affecter le paradigme des architectures à dés publiques.

Tout d'abord, les principes généraux de fonctionnement et de sécurité de la solution sont décrits ainsi que ses différents composants. Après quoi, chaque étape liée au processus de signature est décrite indépendamment du système cryptographique choisi. Il s'agit des étapes principales suivantes :

- la génération des dés par le signataire,

- l'obtention d'une signature par le signataire,

- la vérification d'une signature par un vérifieur.

Enfin, les étapes ci-dessus sont détaillées de façon pratique et la sécurité est analysée en détail dans le cadre de deux modes de réalisation différents utilisant deux schémas cryptographiques de signature distincts, dont le plus répandu à savoir RSA.

Le procédé de signature fait intervenir une tierce partie en plus du signataire lui-même, à savoir un tiers de confiance pourvu d'un serveur informatique pourvu d'un logiciel apte à effectuer, notamment, les opérations de vérification de signature prévues par la présente invention.

Le signataire dispose de deux dés privées, à savoir :

- une première dé privée $K_s$ dite de pré-signature, et

- une seconde clé privée $K_c$ associée au signataire et déposée par lui auprès du serveur du tiers de confiance.

Une troisième clé constitue la Clé publique $K_p$ du signataire, laquelle peut être librement distribuée, de préférence au sein d'un certificat numérique de telle façon qu'elle puisse être associée à l'identité I du signataire.

Selon l'invention, lors d'une opération de génération de signature, le signataire calcule une pré-signature $S_s$ à l'aide de sa clé privée de pré-signature $K_s$ et la soumet au serveur du tiers de confiance. Celui-ci vérifie la validité de cette pré-signature $S_s$. Si elle est correcte, il la signe à l'aide de la seconde clé privée $K_c$ associée au signataire, produisant ainsi une signature S laquelle est ensuite transmise au signataire. La signature S ainsi produite peut être vérifiée par quiconque dispose de la clé publique $K_p$ du signataire.

Si la pré-signature $S_s$ reçue par le serveur du tiers de confiance est incorrecte, cela dénote une dé privée de pré-signature $K_s$ invalide et par extension un code PIN ou mot de passe invalide saisi par le signataire. Dans ce cas, le serveur du tiers de confiance comptabilise cette pré-signature invalide pour le signataire et, au bout d'un nombre consécutif donné de pré-signature invalides, peut bloquer l'usage de la signature par le signataire en rejetant toutes ses demandes ultérieures.

**Principes Sécuritaires**

La sécurité du procédé repose sur les principes de base suivants :

- La clé privée du signataire est chiffrée à l'aide d'un secret (mot de passe ou code PIN) connu de lui seul. Ce secret peut ne consister qu'en quelques chiffres (Typiquement 4 ou 6 chiffres à l'image du code PIN des cartes à microcircuit).

- Les dés privées du serveur du tiers de confiance associées aux différents signataires sont stockées de façon sécurisée.

- La seule façon de réaliser une signature S publiquement vérifiable pour un signataire est de soumettre au serveur du tiers de confiance une pré-signature $S_s$ calculée à l'aide de sa dé privée $K_s$.

- Le serveur du tiers de confiance comptabilise les erreurs de pré-signature $S_s$ et bloque l'usage de la signature par un signataire en cas d'erreurs réitérées.

Pour que la solution soit considérée comme sûre, on ajoutera en corollaire les principes suivants qui devront être vérifiés pour tous les schémas cryptographiques retenus pour le procédé de signature:

- Un attaquant disposant de la clé privée $K_s$ chiffrée, d'un ensemble de messages $S_s$ pré-signés par le signataire et des informations publiquement accessibles (clé publique $K_p$ et signature S) ne doit pas être en mesure d'obtenir des informations relatives à la dé privée ou au mot de passe.

- Le serveur du tiers de confiance ne dispose à aucun moment des informations lui permettant de signer des messages à la place du signataire, et ne connaît notamment pas sa clé privée $K_s$.

6

**Description détaillée de l'invention**

L'invention sera mieux comprise en se référant à la description qui suit ainsi qu'aux figures, dans lesquelles :

- la figure 1 représente un organigramme du dispositif nécessaire pour pouvoir mettre en oeuvre le procédé de signature numérique selon l'invention ;
- la figure 2 représente un organigramme générique du procédé de calcul de signature numérique selon l'invention ;
- la figure 3 représente un organigramme du procédé de génération des dés RSA dans le cas où l'invention est mise en oeuvre à l'aide d'un schéma cryptographique de type RSA ;
- la figure 4 représente un organigramme du procédé de calcul de signature RSA subséquent à l'obtention des clés RSA conformément au procédé de la figure 3 ;
- la figure 5 représente un organigramme du procédé de génération des clés El-Gamal / Harn dans le cas où l'invention est mise en oeuvre à l'aide d'un schéma cryptographique de type El Gamal / Harn ;
- la figure 6 représente un organigramme du procédé de calcul de signature El-Gamal / Harn subséquent à l'obtention des dés conformément au procédé de la figure 5.

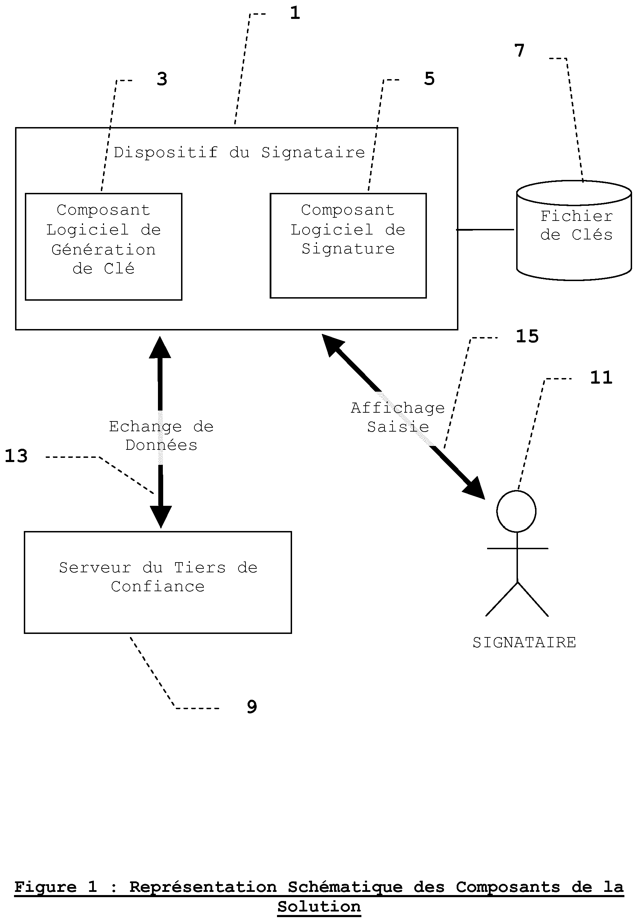

On se réfère à la figure 1 pour décrire les composants et acteurs de la solution selon l'invention. Le procédé selon l'invention met en oeuvre plusieurs composants matériels ou logiciels et plusieurs acteurs auxquels il sera fait référence dans la suite et qui sont décrits brièvement ci-dessous:

Dispositif du Signataire (1) :

Il s'agit du système avec lequel interagit le signataire 11 pour le calcul de signature et la génération des dés. Le procédé peut être mis en oeuvre sur divers types de dispositifs dès lors qu'ils disposent :

- des capacités d'exécution de logiciels et des moyens de calcul nécessaires pour procéder à la génération des dés (notamment un logiciel 3 de génération de clés) et au calcul des signatures (notamment un logiciel 5 de calcul de signature) ;
- d'une capacité minimale de stockage de données et/ou d'interface avec un dispositif de stockage externe (carte mémoire persistante, non représentée) de façon à lire et écrire les données relatives à la dé privée (fichier de dés 7);
- des capacités de communication à travers un réseau de données 13 de façon à mettre en oeuvre le protocole d'échange avec le serveur du tiers de confiance 9 lors de la génération des clés et des calculs de signatures ;
- d'un dispositif 1 de saisie et d'affichage pour les échanges avec le signataire : affichage des données à signer, saisie du code PIN ou du mot de passe, indication de validité ou d'invalidité du code PIN.

Le dispositif 1 du signataire 11 peut donc typiquement être :

- un ordinateur personnel,
- un téléphone portable,
- un assistant personnel, sans que cette liste ne soit limitative.

Logiciel de génération de dés (3) :

C'est le composant logiciel qui s'exécute au sein du dispositif 1 du signataire lors de l'étape de génération des clés. Ce logiciel 3 interagit avec le signataire et échange des données avec le serveur du tiers de confiance 9 dans ce cadre. Ce logiciel peut être un programme autonome, il peut consister en un composant d'une solution informatique globale quelle qu'elle soit (Système d'exploitation, Navigateur internet, Client de messagerie...) ou enfin être réalisé sous la forme d'un composant logiciel téléchargeable embarqué dans une page WEB. Il peut être ou non couplé au logiciel de calcul de signature décrit plus bas.

Logiciel de Calcul de Signature (5) :

C'est le composant logiciel qui s'exécute au sein du dispositif 1 du signataire lors d'un calcul de signature. Ce logiciel interagit avec le signataire et échange des données avec le serveur du tiers de confiance 9 dans ce cadre. Ce logiciel peut être un programme autonome, consister en un composant d'une solution informatique globale quelle qu'elle soit, ou enfin consister en un composant logiciel téléchargeable embarqué dans une page WEB. Il peut être ou non couplé au logiciel de génération de dés décrit plus haut.

Fichier de Clés (7) :

C'est la mémoire permanente où est stockée, sous forme chiffrée, la dé privée du signataire ainsi que certaines données associées telles que le certificat et l'adresse du serveur du tiers de confiance. Ce fichier 7 peut résider de façon permanente dans la mémoire de stockage du dispositif du signataire ou sur une mémoire amovible connectée à ce dernier. Ce fichier peut être si besoin dupliqué ou transféré d'un système à un autre selon les besoins du signataire. Le chiffrement de la dé privée dans ce fichier est réalisé à l'aide d'un algorithme à dé secrète tel que AES [5] ou Triple DES [1] en utilisant une dé dérivée du mot de passe à l'aide d'une fonction de dérivation de clé. De tels modes de chiffrement à l'aide d'un mot de passe sont décrits dans le standard PKCS#5 [8].

Serveur du tiers de confiance (9) :

Il s'agit d'un serveur informatique opéré par un fournisseur de service selon les règles de l'art en ce qui concerne la sécurité d'accès et la protection des données. L'opérateur de ce serveur peut être typiquement, mais pas nécessairement, une autorité de certification. Dans ce cas, la création du certificat peut être réalisée au terme de l'étape de génération des dés.

Autres Acteurs (non représentés en figure 1) :

Les autres acteurs pouvant intervenir dans les opérations liées à la signature numérique telle que décrites dans la présente demande de brevet sont :

Une autorité de certification : une fois l'étape de génération de clé réalisée, il peut être utile pour le signataire de faire certifier sa dé publique auprès d'une autorité de certification. A cette fin, il crée une demande de certificat constituée d'éléments d'identification du signataire et de sa clé publique, le tout signé à l'aide de sa dé privée. Dans le processus nécessaire à l'obtention de ce certificat, seul le mécanisme par lequel le signataire signe numériquement son certificat diffère des solutions de signature actuelles implémentées dans les infrastructures à clé publique. Le processus par lequel l'autorité de certification procède à la vérification de la requête de certificat et par lequel elle vérifie l'identité du signataire n'est pas affecté par le procédé décrit ici.

Vérifieur : le processus de vérification de la signature n'est pas impacté par le procédé selon l'invention. Il en résulte que quiconque dispose de la clé publique et de l'algorithme de vérification peut, de façon autonome, procéder à la vérification d'une signature émise selon le procédé.

**Génération des Clés**

Cette étape est la première phase et est le préalable à l'utilisation du procédé par un signataire. Elle est réalisée à l'initiative du signataire en utilisant le logiciel de génération de dés s'exécutant sur le dispositif du signataire. Durant cette étape :

- le signataire va choisir un code PIN ou un mot de passe. Celui-ci peut également être généré de façon aléatoire par le logiciel de génération de clés et être communiqué au signataire.
- selon le schéma cryptographique utilisé, la génération des trois clés nécessaires au procédé, à savoir : première clé privée de pré-signature $K_s$, seconde dé privée $K_c$ et dé publique $K_p$ va être réalisée soit directement par le logiciel de génération de dés du signataire, soit conjointement par le signataire et le tiers de confiance. Dans tous les cas un protocole d'échange sécurisé de dés est mis en place entre le signataire et le tiers de confiance.

A la fin de cette étape, le fichier de dés est créé. Il contient la clé publique $K_p$ du signataire ainsi que sa clé privée de pré-signature $K_s$, chiffrée au moyen du code PIN ou du mot de passe. Le mode de chiffrement utilisé ici peut par exemple être un de ceux préconisés par le standard PKCS#5 [8]. Le serveur du tiers de confiance quand à lui dispose de la seconde dé privée $K_c$ associée au signataire ainsi que de sa clé publique $K_p$.

Après cette étape, le signataire peut si besoin procéder à une demande de certificat auprès d'une autorité de certification. Cette demande, comme indiqué plus haut, nécessite que le signataire procède à la signature de son identité I et de sa dé publique $K_p$. Le procédé pour y parvenir est identique à celui décrit dans le paragraphe concernant le calcul de signature.

## Calcul de signature

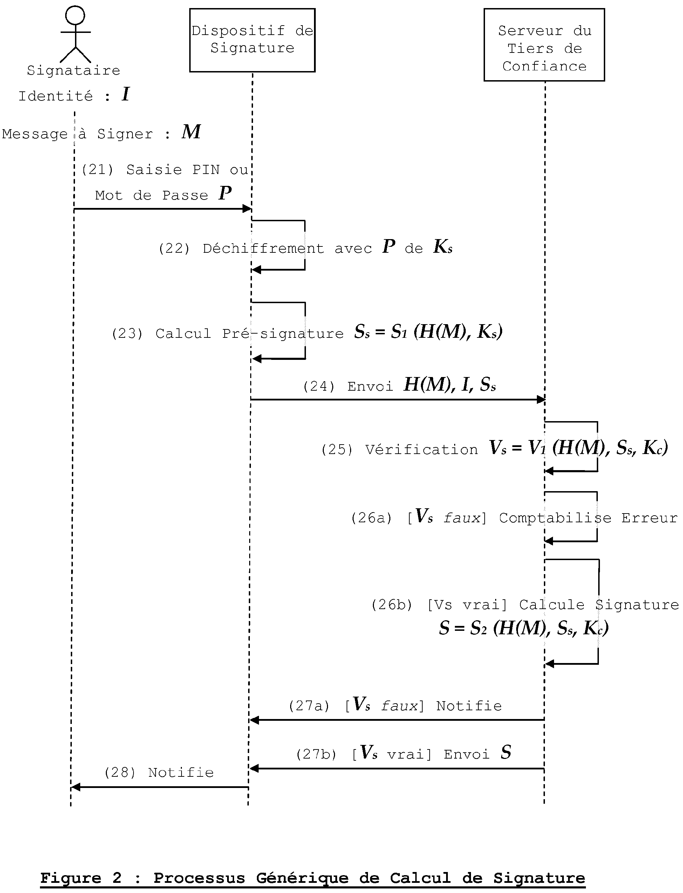

La figure 2 décrit le processus de calcul de signature indépendamment du schéma cryptographique utilisé pour son calcul. Il faut toutefois noter que, selon le schéma cryptographique retenu, ce processus peut différer légèrement par rapport à ce qui est décrit. En particulier, le calcul de la signature peut nécessiter davantage d'échanges entre le signataire et le serveur du tiers de confiance. Cela ne remet toutefois pas en cause le principe général de la solution tel qu'il est décrit. Dans la suite, deux modes de réalisation du procédé sont présentés en détail avec deux schémas cryptographiques différents.

Les fonctions de signature, pour des raisons de sécurité et des raisons pratiques, opèrent sur un condensé ou haché du message plutôt que sur le message lui même. Dans la suite, on notera $H(M)$ le haché du message $M$. Des exemples de fonctions de hachage applicables à la signature numérique sont disponibles dans [2].

Les étapes du procédé indiquées entre parenthèses dans la figure 2, sont les suivantes:

(21) Pour procéder à la signature d'un message $M$, le signataire 11 dont l'identité est I est tenu de saisir son code PIN ou son mot de passe sur le dispositif 1 du signataire ;

(22) Le dispositif 1 du signataire procède au déchiffrement du fichier de dés 7, à l'aide du code PIN ou du mot de passe saisi précédemment, et obtient ainsi la dé privée de pré-signature $K_s$;

(23) Le dispositif du signataire procède au calcul d'une pré-signature $S_s$ à l'aide d'une fonction $S_1$, du message $M$ et de la clé $K_s$ : $S_s = S_1 (H(M), K_s)$ ;

(24) Cette pré-signature $S_s$ est transmise au serveur du tiers de confiance ainsi que le haché $H(M)$ du message à signer et l'identité du signataire I ;

(25) Le serveur du tiers de confiance récupère la seconde clé privée $K_c$ correspondant au signataire via son identité I, puis applique la fonction de vérification $V_1$ au haché $H(M)$ du message, à la dé $K_c$ et à la signature $S_s$, ce qui revient à calculer la valeur $V_s = V_1 (H(M), S_s, K_c)$;

Si $V_s$ est faux, cela dénote une clé privée de pré-signature $K_s$ invalide et par extension un code PIN ou un mot de passe invalide saisi par l'utilisateur.

Si $V_S$ est faux, deux cas sont possibles:

(26a) Le serveur du tiers de confiance comptabilise l'erreur et peut, au bout d'un nombre d'erreurs successives donné, bloquer l'usage de la signature par le signataire, ou bien :

(27a) Le serveur du tiers de confiance se contente de notifier l'erreur par un message approprié.

Si Vs est vrai :

(26b) Le serveur du tiers de confiance réalise le calcul de signature S à l'aide d'une fonction $S_2$ utilisant la seconde dé privée $K_c$, le haché $H(M)$ du message et la pré-signature $S_s$ reçue du signataire : $S = S_2 (H(M), S_s, K_c)$. Cette signature S est telle qu'elle peut être vérifiée à l'aide uniquement du haché $H(M)$ du message et de la clé publique du signataire $K_p$ par la fonction de vérification $V_2$ : $V = V_2 (H(M), S, K_p)$.

(27b) Le serveur du tiers de confiance transmet la signature S au signataire.

(28) Le signataire est informé du résultat de l'opération par le serveur du tiers de confiance. Dans le cas d'une erreur sur la pré-signature $S_s$, il peut effectuer une nouvelle tentative en saisissant un nouveau code PIN ou mot de passe. Dans le cas contraire, le message à signer M et la signature associée S ainsi qu'éventuellement le certificat du signataire peuvent être transmis au vérifieur pour vérification.

Dans le schéma proposé, la fonction de signature $S_1$ utilisée doit impérativement être de type probabiliste, c'est-à-dire que pour un message M à signer, la fonction de signature doit pouvoir renvoyer un grand nombre possible de signatures $S_s$ distribuées de façon aléatoire. Dans le cas contraire, un attaquant peut aisément, à l'aide du fichier de dés 7, d'un message M (ou H(M)) et de la signature $S_s$ associée, mener une attaque par dictionnaire sur le code PIN jusqu'à trouver la dé candidate $K_s$ telle que : $S_s = S_1 (H(M), K_s)$.

**Vérification de la signature**

Comme indiqué plus haut, la vérification d'une signature par un vérifieur est réalisée uniquement avec la clé publique du signataire selon un procédé identique à celui en vigueur dans les architectures à dés publiques par application de la fonction de vérification $V_2$ : $V = V_2$ (H(M), S, $K_p$). Cet algorithme de vérification sera décrit dans la suite pour deux schémas de signature dont le RSA.

**Exemple de mode de réalisation avec un schéma cryptographique RSA**

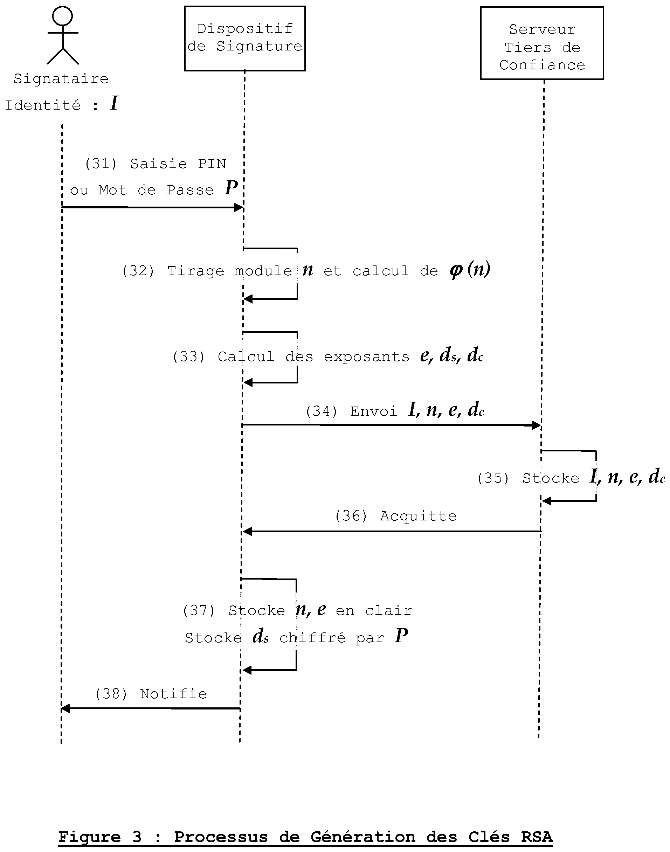

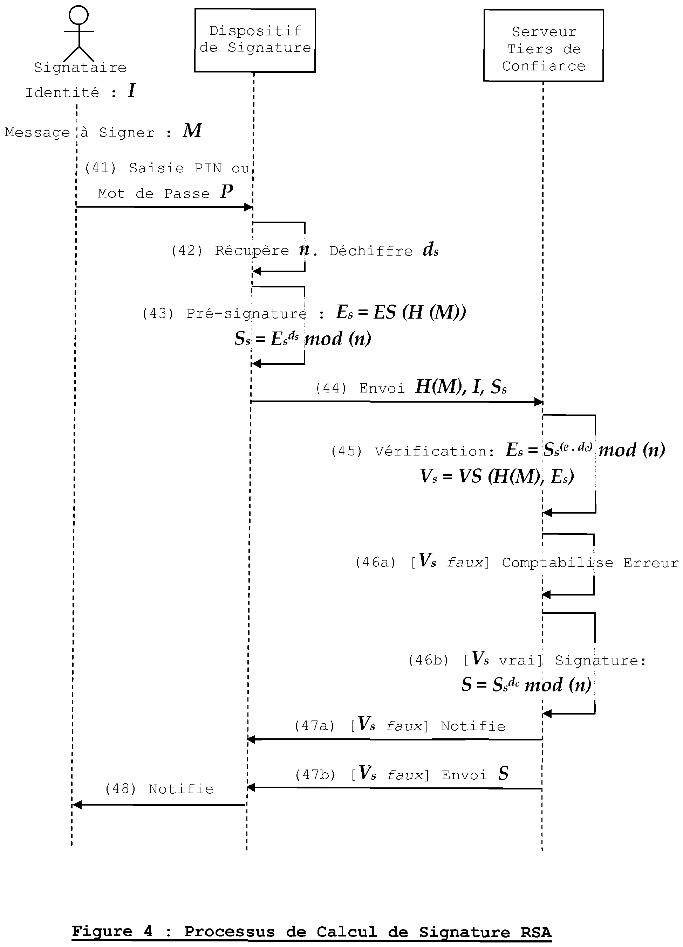

On se réfère aux figures 3 et 4. Dans ce qui suit, les différentes étapes du procédé sont décrites en détail dans le cas d'une signature calculée à l'aide de l'algorithme RSA en utilisant 3 exposants.

**Génération des Clés RSA**

La figure 3 précise le mode de génération des clés dans le cas de l'algorithme cryptographique RSA.

(31) Le signataire d'identité I choisit et saisit son code PIN ou son mot de passe P.
(32) Le dispositif 1 du signataire génère aléatoirement deux entiers premiers p et q approximativement de même ordre puis calcule le module n = (p . q) et la fonction indicatrice d'Euler φ (n) = (p - 1) (q - 1). Le procédé proposé s'applique également aux variantes dites "multiprime" et "multipower" de RSA telles que décrites dans [7] et [10]. Dans ce cas :

$$\text{Si} \quad n = \prod_{i=1}^{q} p_i^{k_i} \quad \text{alors} \quad \varphi(n) = \prod_{i=1}^{q} (p_i - 1) p_i^{k_i - 1} = n \prod_i \left( 1 - \frac{1}{p_i} \right)$$

Où $p_i$, i=1..q sont les facteurs premiers de n tirés aléatoirement.
(33) Le dispositif du signataire utilise un exposant public e convenu d'avance (les valeurs 3 ou 65537 sont communément utilisées). Il tire aléatoirement un exposant privé $d_1$ d'une longueur convenue et tel que pgcd ($d_1$, φ (n)) = 1 (ou "pgcd" désigne la fonction "plus grand commun diviseur"). Enfin, il calcule l'exposant $d_2$ comme l'inverse modulo φ (n) du produit de *e* par $d_1$, soit tel que : *e* . $d_1$ . $d_2$ = 1 mod φ (n). L'exposant $d_s$ du signataire est un des exposants $d_1$ ou $d_2$, tandis que l'exposant $d_c$ du serveur du tiers de confiance est l'autre exposant, respectivement $d_2$ ou $d_1$. Le choix de $d_1$ ou $d_2$ pour exposant privé du signataire est sans incidence sur la sécurité mais permet de reporter la charge de calcul lors d'une signature sur le signataire ou le serveur du tiers de confiance selon les besoins. La clé publique est le couple (n, *e*), la clé privée du signataire est (n, $d_s$) et la dé privée du serveur du tiers de confiance est (n, $d_c$).
(34) Le dispositif du signataire transmet au serveur du tiers de confiance un message contenant son identité I, sa dé publique (n, e) et l'exposant $d_c$ de la dé privée du serveur du tiers de confiance. La transmission de $d_c$ doit être sécurisée selon les règles de l'art car cette valeur ne doit être connue que du serveur du tiers de confiance. Après quoi, le dispositif du signataire efface l'ensemble des données utilisées durant le calcul à l'exception de la dé publique (n, *e*) et de l'exposant privé $d_s$ du signataire.
(35) Le serveur du tiers de confiance stocke la dé publique (n, *e*) et l'exposant privé $d_c$ du tiers de confiance associés à l'identité I du signataire.
(36) Le serveur du tiers de confiance acquitte le message.
(37) Le dispositif du signataire stocke dans le fichier de dés, la clé publique (n, *e*) en clair et l'exposant privé $d_s$ du signataire chiffré à l'aide du PIN ou mot de passe P.
(38) Le dispositif du signataire informe le signataire de l'issue de la procédure de génération des clés.

**Calcul d'une Signature RSA**

Le chiffrement RSA étant déterministe, il convient d'appliquer une fonction d'encodage probabiliste au message à signer. Une telle fonction a pour effet d'ajouter une composante aléatoire au message à signer de sorte qu'un message signé avec une clé peut potentiellement conduire à un grand nombre de signatures. Un exemple d'une telle fonction est proposé par le schéma de signature PSS tel que décrit dans le standard PKCS#1 [4].
Dans la suite, on notera ES la fonction l'encodage probabiliste et ES(H(M)) cette même fonction opérant sur un message M haché par la fonction de hachage H. VS désigne la fonction de vérification associée à ES. Si : VS (H(M), ES (H(M'))) = Vrai alors H(M) = H(M') et donc M = M'.

La figure 4 décrit le processus de calcul de signature en utilisant l'algorithme RSA. Le détail des étapes est précisé ci-dessous.

(41) Le signataire saisit son code PIN ou son mot de passe P.

(42) Le dispositif du signataire récupère le module n en clair et déchiffre son exposant privé $d_s$ à l'aide de P.

(43) Le dispositif du signataire calcule la pré-signature en appliquant la fonction d'encodage probabiliste $E_s$ = ES (H(M)) puis la fonction de chiffrement RSA (Exponentiation Modulaire) au message M : $S_s = E_s^{d_s}$ mod n

(44) Cette pré-signature $S_s$ est transmise au serveur du tiers de confiance ainsi que le haché H(M) du message à signer et l'identité du signataire I.

(45) Le serveur du tiers de confiance récupère le module n, l'exposant du serveur du tiers de confiance $d_c$ et l'exposant public $e$ associé à l'identité I du signataire. Après quoi, il recouvre la valeur de $E_s$ à l'aide de la fonction de déchiffrement RSA pour l'exposant $(e . d_c)$ $E_s = S_s^{(e.d_c)}$ mod n. Enfin, le serveur du tiers de confiance applique la fonction de vérification au résultat du déchiffrement : $V_s$ = VS (H(M), $E_s$)

Par la suite, deux cas sont possibles:

Si [$V_S$ faux] :

(46a) Le serveur du tiers de confiance comptabilise l'erreur.

(47a) Le serveur notifie l'erreur par un message approprié

Si [$V_s$ vrai] :

(46b) Le serveur du tiers de confiance réalise le calcul de la signature par l'exponentiation modulaire RSA : S = $S_s^{d_c}$ mod n

(47b) Le serveur du tiers de confiance transmet la signature S au signataire.

(48) Enfin, le signataire est informé du résultat de l'opération.

**Vérification d'une Signature RSA**

Ce processus est en tout point identique à celui utilisé pour une signature RSA-PSS générée selon la méthode traditionnelle.

(1) Le vérifieur obtient la clé publique de du signataire (n, $e$) à l'aide d'un certificat transmis ou via l'interrogation d'une base de données.

(2) Le vérifieur recouvre la valeur de $E_s$ à l'aide de la fonction de déchiffrement RSA : $E_s = S^e$ mod n

(3) Le vérifieur applique la fonction de vérification au résultat du déchiffrement :

$$V = VS\ (H(M),\ E_s).$$

**Sécurité du procédé pour la Signature RSA**

La sécurité du procédé pour la signature RSA repose sur le respect scrupuleux des processus décrits plus haut pour les étapes de génération des clés et de calcul de signature, en particuliers :

- La confidentialité dans la communication de l'exposant $d_c$ au serveur du tiers de confiance. (Cet exposant peut être, par exemple, communiqué chiffré à l'aide d'un certificat RSA associé au serveur du tiers de confiance) ;
- L'effacement par le dispositif signataire des données temporaires (facteurs premiers du module) et de l'exposant $d_c$ du serveur du tiers de confiance lors de l'étape de génération des clés,
- L'utilisation d'un schéma de signature probabiliste avec une entropie suffisante.

En outre le chiffrement de l'exposant privé $d_s$ du signataire doit être réalisé avec certaines précautions afin de parer des attaques de type "texte clair connu", à savoir:

- L'exposant étant forcément impair, son bit de poids faible est '1'. Lors du chiffrement de l'exposant, le dispositif du signataire doit remplacer ce bit par un aléa tandis que lors du déchiffrement, la valeur'1' est forcée pour ce bit.
- De la même façon, le bit de poids fort correspondant à la taille de l'exposant est connu à priori et le même procédé que ci-dessus peut être employé pour le masquer.
- Enfin dans le cas où l'exposant public est égal à 3, l'exposant privé du signataire doit être relativement premier avec 3. Là aussi, la solution consiste à remplacer, lors du chiffrement, le second bit de poids faible de l'exposant par une valeur aléatoire. Lors du déchiffrement, la valeur de ce bit est recalculée de telle façon que l'exposant soit premier avec 3.

**Exemple de mode de réalisation avec un schéma cryptographique El Gamal - Harn**

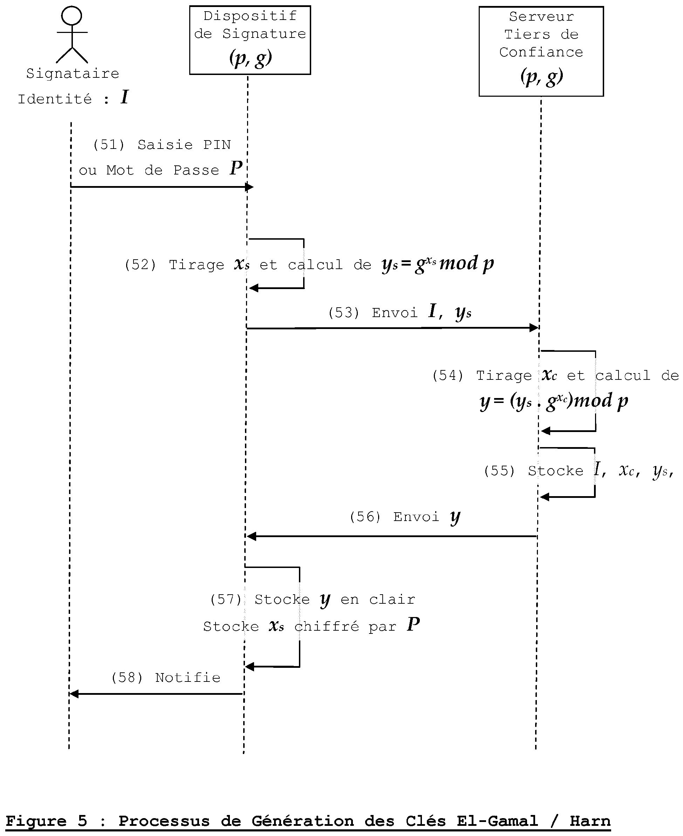

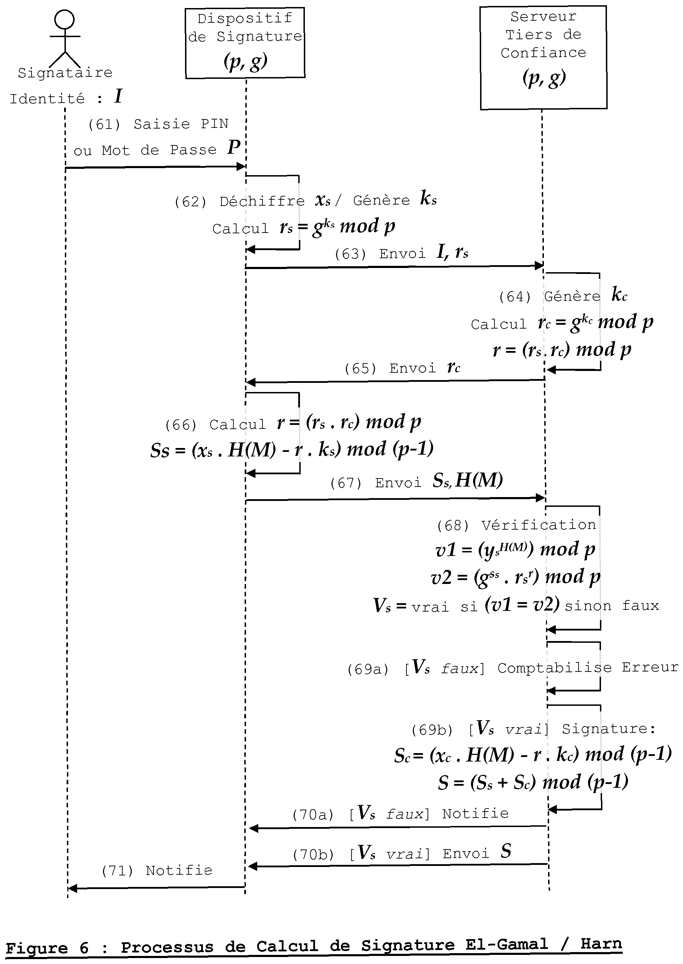

On se réfère aux figures 5 et 6. Dans ce qui suit, les différentes étapes du procédé sont décrites en détail dans le cas d'une signature calculée à l'aide du schéma de Harn [12] qui est une variante multi signature du procédé de signature El Gamal [11].

**Génération des Clés El Gamal - Harn**

La figure 5 précise le mode de génération des clés dans le cas de l'algorithme cryptographique El Gamal - Harn.
Les paramètres communs de signature (p, g) sont connus du dispositif du signataire et du serveur du tiers de confiance et similaires à ceux définis pour la signature El Gamal, à savoir:

- p : un grand nombre entier premier,
- g : un entier positif inférieur à p.

Le détail des étapes du procédé de génération de dés est précisé ci-dessous.

(51) Le signataire d'identité I choisit et saisit son code PIN ou son mot de passe P.

(52) Le dispositif du signataire génère aléatoirement son exposant privé $x_s$, un entier strictement positif et inférieur à p puis calcule la clé $y_s = g^{x_s} \bmod p$

(53) Le dispositif du signataire transmet au serveur du tiers de confiance un message contenant son identité I et la clé $y_s$. La transmission d'$y_s$ doit être sécurisée selon les règles de l'art car cette valeur ne doit être connue que du serveur du tiers de confiance. Après quoi, le dispositif du signataire efface la clé $y_s$.

(54) Le serveur du tiers de confiance génère aléatoirement son exposant privé $x_c$, un entier strictement positif et inférieur à p puis calcule la dé $y = y_s \cdot g^{x_c} \bmod p$. La dé publique est le triplet (p, g, y), la clé privée du signataire est (p, g, $x_s$) et la clé privée du serveur du tiers de confiance est (p, g, $y_s$, $x_c$).

(55) Le serveur du tiers de confiance stocke la dé publique y, la dé $y_s$, et l'exposant privé $x_c$ du serveur du tiers de confiance associé à l'identité I du signataire.

(56) Le serveur du tiers de confiance transmet la dé publique y au dispositif 15 du signataire.

(57) Le dispositif du signataire stocke au sein du fichier de dés, la clé publique (p, g, y) en clair et son exposant privé signataire $x_s$ chiffré à l'aide du code PIN ou du mot de passe P.

(58) Le dispositif du signataire informe le signataire de l'issue de la procédure de génération des clés.

**Calcul d'une Signature El Gamal - Harn**

La figure 6 décrit le processus de calcul de signature dans le cas de l'algorithme cryptographique El Gamal - Harn. Le détail des étapes est précisé ci-dessous.

(61) Le signataire saisit son code PIN ou son mot de passe P.

(62) Le dispositif du signataire récupère la clé publique (p, g, y) en clair et déchiffre l'exposant privé $x_s$ à l'aide de P. Il tire un nombre aléatoire $k_s$ strictement positif et premier avec (p -1) puis calcule la valeur: $r_s = g^{k_s} \bmod p$ .

(63) Cette valeur $r_s$ est transmise au serveur du tiers de confiance ainsi que l'identité du signataire I.

(64) Le serveur du tiers de confiance récupère la clé publique (p, g, y) et la clé privée tiers de confiance $(y_s, x_c)$ associées à l'identité I. Il tire un nombre aléatoire $k_c$ strictement positif et premier avec (p -1), calcule la valeur: $r_c = g^{k_c}$ mod p puis le produit r = $(r_s.r_c)$ mod p .

(65) La valeur $r_c$ est transmise au dispositif du signataire

(66) Le dispositif du signataire calcule le produit r = $(r_s. r_c)$ mod p puis la pré-signature: $S_s = (x_s.H(M)-r.k_s)$ mod (p-1).

(67) Cette valeur $S_s$ est transmise au serveur du tiers de confiance ainsi que le haché H(M) du message.

(68) Le serveur du tiers de confiance procède à la vérification de la pré-signature ainsi reçue en réalisant les calculs suivants : $V_1 = (y_s^{H(M)})$ mod p et $V_2 = (g^{S_s} . r_s^{r})$ mod p

Le résultat de la vérification $V_s$ de signature est vrai si $(V_1 = V_2)$. Dans le cas contraire $V_s$ est faux.
Par la suite, deux cas sont possibles:

Si [$V_S$ faux] :

(69a) Le serveur du tiers de confiance comptabilise l'erreur.
(70a) Le serveur du tiers de confiance notifie l'erreur par un message approprié.

Si [$V_S$ vrai] :

(69b) Le serveur du tiers de confiance réalise le calcul de la signature S comme suit :

$$S_c = (x_c . H(M) - r . k_c) \bmod (p - 1) \; ; \; puis : S = (S_s + S_c) \bmod (p - 1)$$

puis : S = $(S_s+S_c)$ mod (p-1)

(70b) Le serveur transmet la signature S au signataire.

(71) Le signataire est informé du résultat de l'opération. La signature est formée du couple : (s, r).

**Vérification d'une Signature El Gamal - Harn**

Le calcul utilisé pour la vérification de la signature diffère légèrement de celui utilisé dans le cas d'une signature DSA ordinaire :

(1) Le vérifieur obtient la clé publique du signataire (p, g, y) à l'aide d'un certificat transmis ou via l'interrogation d'une base de données.

(2) Le vérifieur procède à la vérification de la signature ainsi reçue en réalisant les calculs suivants : $V_1 = (y^{H(M)})$ mod p et $V_2 = (g^s.r^r)$ mod p

Le résultat de la vérification $V_s$ de signature est vrai si (V1 = V2). Dans le cas contraire $V_s$ est faux.

**Sécurité du procédé pour la Signature El Gamal - Harn**

La sécurité du procédé pour la signature El Gamal - Harn repose sur le respect scrupuleux des processus décrits plus haut pour les étapes de génération des dés et de calcul de signature, en particulier :

- La confidentialité dans la communication de la clé $y_c$ au serveur du tiers de confiance (cette clé peut être, par exemple, communiquée chiffrée à l'aide d'un certificat RSA associé au Serveur du tiers de confiance) ;

- L'effacement par le dispositif signataire de cette clé $y_c$ lors de l'étape de génération des dés.

Concernant le stockage par le dispositif signataire de l'exposant privé du signataire $x_c$, comme dans le cas de RSA, les bits de parité et le bit de poids fort doivent être rendus aléatoires pour parer les attaques de type "texte clair connu".

**Avantages de l'invention :**

L'invention permet de répondre aux buts visés, en proposant un procédé de signature numérique ayant une sécurité renforcée de la dé privée de l'utilisateur sans avoir besoin de recourir à des moyens matériels contraignants tels les cartes à puce ou autres dispositifs électronique sécurisés (carte PCMCIA ou clé USB).

Comme on le voit le procédé de signature implique deux parties, le signataire et le tiers de confiance, chacun disposant d'une des deux clés privées du signataire. Ainsi non seulement aucune signature ne peut être créée sans la signature de chacune des parties avec celle des deux dés privées du signataire qui leur a été affectée, mais un premier niveau de vérification est assuré par le tiers de confiance qui en cas d'échecs répétés (généralement 3) bloque les tentatives suivantes de signature. Ainsi en cas d'accès même temporaire au fichier de clés du signataire, toute attaque pour tenter de découvrir la première dé privée du signataire est rendue impossible.

Par ailleurs, la présente invention est totalement compatible avec le mode de fonctionnement des infrastructures existantes à clés publiques ainsi qu'avec le procédé de signature le plus répandu actuellement à savoir RSA [4]. En effet, dans le cas du procédé appliqué à la signature multiple RSA, seules diffèrent les opérations critiques que sont la génération des clés et la génération de la signature. Une fois une signature RSA calculée selon le procédé de l'invention, cette signature présente des caractéristiques strictement identiques à une signature calculée de façon traditionnelle, c'est-à-dire à l'aide de la seule dé privée de l'utilisateur. En outre, la signature peut être vérifiée par quiconque dispose du certificat associé, à l'aide du même algorithme que celui utilisé dans le cadre de la signature RSA traditionnelle.

Enfin, le procédé peut être aisément implémenté sur une variété de dispositifs électroniques fixes ou nomades tels que : ordinateurs personnels, organiseurs, téléphones mobiles, consoles de jeux, équipements de réseaux de type routeurs ou pare-feux...

En définitive, le champ d'application de la présente invention est vaste. On peut citer à titre d'exemple :

- la signature numérique de contrats,

- l'authentification d'un utilisateur vis-à-vis d'un serveur par exemple un site WEB,

- la signature de transactions ou l'authentification via téléphones mobiles (sécurité à 2 facteurs),

- la signature de logiciels,

- L'établissement de réseaux virtuels privés (VPN), etc.

**Référence Bibliographiques citées :**

[1] US Patent N° 6,178,058 - January 2,2001 - Kausik
Method and apparatus for cryptographically camouflaged cryptographic key storage, certification and use.
[2] National Institute of Standards and Technology (NIST). FIPS 46-3, Data Encryption Standard (DES). October 1999.
[3] National Institute of Standards and Technology (NIST). FIPS 180-2, Secure Hash Standard (SHS). August 2002.
[4] National Institute of Standards and Technology (NIST). FIPS 186-3. Digital Signature Standard (DSS). March 2006.
[5] National Institute of Standards and Technology (NIST). FIPS 197. Advanced Encryption Standard (AES). November 2001.
[6] RSA Laboratories. PKCS #1 v2.1: RSA Encryption Standard. June 2002
[7] RSA Laboratories. PKCS #1 v2.0 Amendment 1: Multi-Prime RSA. July 2000.
[8] RSA Laboratories. PKCS #5 v2.0 Password-Based Cryptography Standard. March 1999
[9] RSA Laboratories. PKCS #11 v2.20: Cryptographie Token Interface Standard. June 2004
[10] RSA Laboratories. Cryptobytes Volume 5, No.1 - Winter/Spring 2002
[11] T. ElGamal. A public key cryptosystem and a signature scheme based on discrete logarithms, IEEE Trans. Inform. Theory 31 (4) (1985) 469-472

[12] L. Ham, Digital Multisignature with Distinguished Signing Authorities, IEE Electronics Letters, 35 (4) (1999) 294-295

[13] B. Schneier. Applied Cryptography Second Edition. 1996

[14] US 4 868 877 A (FISCHER ADDISON)

[15] US 2007/208944 A1 (PAVLICIC MILADIN)

[16] US 2001/016911 A1 (OBANA SATOSHI)

[17] GB 2 337 145 (CertCo LLC)

**Revendications**

1.  Procédé de signature numérique d'un message M par un signataire ayant une identité I et disposant d'un dispositif de signature, ledit procédé utilisant un schéma de cryptographie à clé publique et étant **caractérisé en ce que** le signataire dispose d'une clé publique $K_p$ et de deux clés privées $K_s$ et $K_c$, la seconde clé privée $K_c$ étant déposée auprès d'un tiers de confiance, et **en ce qu'**il comporte, pour chaque opération de signature, deux étapes complémentaires réalisées chacune avec une clé privée distincte, à savoir :

    - le calcul par le signataire d'une pré-signature $S_s$ du message M à l'aide de sa première clé privée $K_s$, puis la transmission du message M et de la pré-signature $S_s$ au tiers de confiance
    - la vérification par le tiers de confiance de la pré-signature $S_s$, suivie du calcul par le tiers cosignataire d'une signature S du message M, à l'aide d'une part de la seconde clé privée $K_c$ du signataire déposée auprès du tiers de confiance, et d'autre part de ladite pré-signature $S_s$ préalablement calculée par le signataire.

2.  Procédé de signature numérique selon la revendication 1, **caractérisé en ce qu'**il comporte, préalablement aux étapes de signature, une étape de génération et de stockage des deux dés privées $K_s$, $K_c$ et de la dé publique $K_p$ du signataire, consistant en :

    - la génération par le signataire de sa première clé privée de pré-signature $K_s$ ;
    - la génération de la seconde dé privée $K_c$, cette dé étant générée, selon le schéma de cryptographie utilisé, soit par le signataire seul, soit par le tiers de confiance à l'aide d'éléments que lui a transmis le signataire ;
    - la génération de la clé publique $K_p$ du signataire, cette clé étant générée, selon le schéma de cryptographie utilisé, soit par le signataire seul, soit par le tiers de confiance à l'aide d'éléments que lui a transmis le signataire ;
    - la transmission sécurisée au tiers de confiance de la clé publique $K_p$ et de sa seconde dé privée $K_c$ ou des éléments permettant la génération de celles-ci ;
    - le chiffrement de la première clé privée $K_s$ du signataire et le stockage de cette clé privée chiffrée ainsi que de la clé publique $K_p$ dans un fichier de clés contrôlé par le signataire.

3.  Procédé de signature numérique selon la revendication 2, **caractérisé en ce que** la seconde clé privée $K_c$ du signataire d'identité I et utilisée par le tiers tiers de confiance à l'aide d'un serveur et d'un algorithme de vérification de signature, est déterminée en fonction du schéma de cryptographie utilisé, de la première clé privée $K_s$ et de la clé publique $K_p$ du signataire.

4.  Procédé de signature numérique selon la revendication 2, **caractérisé en ce que** la pré-signature d'un message M par le signataire comporte les étapes suivantes :

    - identification du signataire auprès de son dispositif de signature, à l'aide d'un mot de passe ou d'un code PIN ;
    - déchiffrement par le dispositif de signature du signataire du contenu du fichier de clés à l'aide dudit mot de passe ou dudit code PIN, et obtention de la première clé privée $K_s$ ;
    - calcul par le dispositif de signature du signataire d'une pré-signature $S_s$ à l'aide de sa première clé privée $K_s$ et transmission au serveur du tiers de confiance de cette pré-signature $S_s$, du message à signer M ou de son haché H(M), et de l'identité I du signataire ;
    - récupération par le serveur du tiers de confiance de la seconde clé privée $K_c$ du signataire, à l'aide de l'identité I de celui-ci;
    - vérification par le serveur du tiers de confiance à l'aide de la seconde clé privée $K_c$ et de la clé publique $K_p$ du signataire, de la validité de ladite pré-signature $S_s$, en calculant une valeur de vérification $V_s$ qui peut être vraie, indiquant que la pré-signature $S_s$ est valide, ou fausse, indiquant que la pré-signature $S_s$ est fausse ;
    - si ladite pré-signature $S_s$ est valide, le serveur du tiers de confiance calcule à l'aide de la seconde clé privée $K_c$ du signataire d'identité I, la signature S.

**5.** Procédé de signature numérique selon la revendication 2, **caractérisé en ce que** si la pré-signature $S_s$ n'est pas valide, le serveur du tiers de confiance notifie l'erreur au signataire et comptabilise les pré-signatures $S_s$ invalides pour le signataire et, au bout d'un nombre consécutif donné de pré-signatures invalides, bloque l'usage de la signature par le signataire en rejetant toutes ses demandes ultérieures de signature.

**6.** Procédé de signature numérique selon la revendication 2, **caractérisé en ce que** la pré-signature $S_s$ est calculée en appliquant une fonction cryptographique probabiliste au haché H(M) du message numérique M et à la première dé privée $K_s$ du signataire.

**7.** Procédé de signature numérique selon la revendication 4, **caractérisé en ce que** la valeur de vérification $V_s$ est calculée en appliquant une fonction de vérification au haché H(M) du message M, à la seconde clé privée $K_c$ et à la pré-signature $S_s$.

**8.** Procédé de signature numérique selon l'une quelconque des revendications précédentes, **caractérisé en ce que** la signature S obtenue pour le message M à l'aide des deux clés privées $K_s$ et $K_c$ du signataire peut être vérifiée par tout tiers connaissant le schéma cryptographique utilisé et disposant de la clé publique $K_P$ du signataire et du message M ou de son haché H(M).

**9.** Procédé de signature numérique selon l'une quelconque des revendications précédentes, **caractérisé en ce que** la dé publique $K_P$ du signataire est librement distribuée, notamment à l'aide d'un certificat numérique apte à associer la clé publique $K_p$ à l'identité I du signataire.

**10.** Procédé de signature numérique selon la revendication 1, **caractérisé en ce que** le calcul de la signature S par le serveur du tiers de confiance est réalisé par une fonction utilisant la seconde clé privée $K_C$, le haché H(M) du message et la pré-signature $S_s$ reçue du signataire.

**11.** Procédé de signature numérique selon l'une quelconque des revendications précédentes, utilisant le schéma cryptographique RSA pour la signature, **caractérisé en ce que** le calcul de signature comporte les étapes consistant à :

(41) pour le signataire, saisir son code PIN ou son mot de passe P sur son dispositif de signature ;
(42) récupérer le module RSA n en clair et déchiffrer son exposant privé $d_s$ à l'aide du mot de passe P ou du code PIN ;
(43) calculer la pré-signature $S_s$ à l'aide du dispositif de signature, en appliquant une fonction d'encodage probabiliste $E_s = ES(H(M))$ puis la fonction d'exponentiation modulaire RSA au message M : $S_s = E_s^{d_s} \bmod (n)$ ;
(44) transmettre ladite pré-signature $S_s$ au serveur du tiers de confiance ainsi que le haché H(M) du message à signer et l'identité I du signataire;
(45) récupération par le serveur du tiers de confiance du module n, de l'exposant de correspondant à la seconde clé privée $K_c$ et de l'exposant public $e$ associé à l'identité I du signataire, puis recouvrement de la valeur de $E_s$ à l'aide de la fonction d'exponentiation modulaire RSA pour l'exposant produit $(e.d_c)$ : $E_s = S_s^{(e.d_c)} \bmod n$, et application de la fonction de vérification au résultat du déchiffrement pour calculer la valeur de vérification $V_s = VS(H(M), E_s)$;
(46) si VS est fausse, comptabiliser l'erreur au niveau du serveur du tiers de confiance et notifier l'erreur au signataire ;
(47) si VS est vraie, calculer la signature S par la fonction d'exponentiation modulaire RSA : $S = S_s^{dc} \bmod n$, et transmettre la signature S au signataire.

**12.** Procédé de signature numérique selon l'une quelconque des revendications 1 à 10, utilisant le schéma cryptographique El Gamal pour la signature, **caractérisé en ce que** le calcul de signature comporte les étapes consistant à :

(61) pour le signataire, saisir son code PIN ou son mot de passe P sur son dispositif de signature ;
(62) récupérer à l'aide du dispositif de signature, la clé publique (p, g, y) en clair et déchiffrer l'exposant privé $x_s$ à l'aide de P, puis tirer un nombre aléatoire $k_s$ strictement positif et premier avec (p-1) et calculer la valeur: $r_s = g^{k_s} \bmod p$ ;
(63) transmettre la valeur $r_s$ au serveur du tiers de confiance ainsi que l'identité I du signataire ;
(64) récupération par le serveur du tiers de confiance de la clé publique (p, g, y) et de la seconde clé privée $(y_s, x_c)$ associées à l'identité I, puis tirer un nombre aléatoire $k_c$ strictement positif et premier avec (p-1), et calculer la valeur: $r_c = g^{k_c} \bmod p$ puis le produit $r = (r_s.r_c) \bmod p$;
(65) transmettre la valeur $r_c$ au dispositif de signature du signataire ;

(66) calcul par le dispositif de signature du produit r = ($r_s.r_c$) mod p puis de la pré-signature : $S_s$ = ($x_s$.H(M) - r.$k_s$) mod (p-1) ;

(67) transmettre la valeur de la pré-signature $S_s$ au serveur du tiers de confiance ainsi que le haché H(M) du message ;

(68) vérification par le serveur du tiers de confiance de la pré-signature ainsi reçue en réalisant les calculs suivants : V1 = (ysH(M)) mod p ; V2 = (gSs.rsr) mod p ; la valeur de Vs vérification de signature est vraie si (V1 = V2) et fausse dans le cas contraire ;

(69) si VS est fausse, le serveur du tiers de confiance comptabilise l'erreur et notifie l'erreur au signataire ;

(70) si VS est vraie, le serveur du tiers de confiance réalise le calcul de la signature S comme suit : $S_c$ = ($x_c$.H(M)-r.$K_c$) mod (p - 1) ; puis : S = ($S_s$ + $S_c$) mod (p - 1).

**Patentansprüche**

1. Verfahren zur digitalen Signatur einer Nachricht M durch einen Unterzeichner, der eine Identität I hat und über eine Signaturvorrichtung verfügt, wobei das Verfahren ein kryptographisches Schema mit öffentlichem Schlüssel verwendet und **dadurch gekennzeichnet ist, dass** der Unterzeichner über einen öffentlichen Schlüssel $K_P$ und über zwei private Schlüssel $K_S$ und $K_C$ verfügt, wobei der zweite private Schlüssel $K_C$ bei einem vertrauenswürdigen Dritten hinterlegt ist, und dass es für jeden Signaturvorgang zwei komplementäre Schritte aufweist, die je mit einem unterschiedlichen privaten Schlüssel durchgeführt werden, nämlich:

   - die Berechnung einer Vorsignatur $S_S$ der Nachricht M durch den Unterzeichner mit Hilfe seines ersten privaten Schlüssels $K_S$, dann die Übertragung der Nachricht M und der Vorsignatur $S_S$ an den vertrauenswürdigen Dritten;
   - die Überprüfung der Vorsignatur $S_S$ durch den vertrauenswürdigen Dritten, gefolgt von der Berechnung einer Signatur S der Nachricht M durch den Mitunterzeichner mit Hilfe einerseits des zweiten privaten Schlüssels $K_C$ des Unterzeichners, der beim vertrauenswürdigen Dritten hinterlegt ist, und andererseits der Vorsignatur $S_S$, die vorab durch den Unterzeichner berechnet wird.

2. Digitales Signaturverfahren nach Anspruch 1, **dadurch gekennzeichnet, dass** es vor den Signaturschritten einen Schritt der Erzeugung und Speicherung der zwei privaten Schlüssel $K_S$, $K_C$ und des öffentlichen Schlüssels $K_P$ des Unterzeichners aufweist, die bestehen aus:

   - der Erzeugung seines ersten privaten Vorsignatur-Schlüssels $K_S$ durch den Unterzeichner;
   - der Erzeugung des zweiten privaten Schlüssels $K_C$, wobei dieser Schlüssel gemäß dem verwendeten kryptographischen Schema entweder nur vom Unterzeichner oder vom vertrauenswürdigen Dritten mit Hilfe von Elementen erzeugt wird, die der Unterzeichner an ihn übertragen hat;
   - die Erzeugung des öffentlichen Schlüssels $K_P$ des Unterzeichners, wobei dieser Schlüssel gemäß dem verwendeten kryptographischen Schema entweder nur vom Unterzeichner oder vom vertrauenswürdigen Dritten mit Hilfe von Elementen erzeugt wird, die der Unterzeichner an ihn übertragen hat;
   - die gesicherte Übertragung des öffentlichen Schlüssels $K_P$ und seines zweiten privaten Schlüssels $K_C$ oder von Elementen, die deren Erzeugung ermöglichen, an den vertrauenswürdigen Dritten;
   - die Verschlüsselung des ersten privaten Schlüssels $K_S$ des Unterzeichners und die Speicherung dieses verschlüsselten privaten Schlüssels sowie des öffentlichen Schlüssels $K_P$ in einer Schlüsseldatei, die vom Unterzeichner kontrolliert wird.

3. Digitales Signaturverfahren nach Anspruch 2, **dadurch gekennzeichnet, dass** der zweite private Schlüssel $K_C$ des Unterzeichners mit der Identität I und vom vertrauenswürdigen Dritten mit Hilfe eines Servers und eines Signaturüberprüfungsalgorithmus verwendet abhängig vom verwendeten kryptographischen Schema, vom ersten privaten Schlüssel $K_S$ und vom öffentlichen Schlüssel $K_P$ des Unterzeichners bestimmt wird.

4. Digitales Signaturverfahren nach Anspruch 2, **dadurch gekennzeichnet, dass** die Vorsignatur einer Nachricht M durch den Unterzeichner die folgenden Schritte aufweist:

   - Identifizierung des Unterzeichners in seiner Signaturvorrichtung mit Hilfe eines Passworts oder eines PIN-Codes;
   - Entschlüsselung des Inhalts der Schlüsseldatei durch die Signaturvorrichtung des Unterzeichners mit Hilfe des Passworts oder des PIN-Codes und Erhalt des ersten privaten Schlüssels $K_S$;
   - Berechnung einer Vorsignatur $S_S$ durch die Signaturvorrichtung des Unterzeichners mit Hilfe seines ersten privaten Schlüssels $K_S$ und Übertragung dieser Vorsignatur $S_S$, der zu signierenden Nachricht M oder ihres Hashwerts H(M) und der Identität I des Unterzeichners an den Server des vertrauenswürdigen Dritten;

- Wiedergewinnung des zweiten privaten Schlüssels $K_C$ des Unterzeichners mit Hilfe von dessen Identität I durch den Server des vertrauenswürdigen Dritten;

- Überprüfung der Gültigkeit der Vorsignatur $S_S$ mit Hilfe des zweiten privaten Schlüssels $K_C$ und des öffentlichen Schlüssels $K_P$ des Unterzeichners durch den Server des vertrauenswürdigen Dritten durch Berechnen eines Überprüfungswerts $V_S$, der richtig sein kann, wodurch angezeigt wird, dass die Vorsignatur $S_S$ gültig ist, oder falsch sein kann, wodurch angezeigt wird, dass die Vorsignatur $S_S$ falsch ist;

- wenn die Vorsignatur $S_S$ gültig ist, berechnet der Server des vertrauenswürdigen Dritten mit Hilfe des zweiten privaten Schlüssels $K_C$ des Unterzeichners mit der Identität I die Signatur S.

5. Digitales Signaturverfahren nach Anspruch 2, **dadurch gekennzeichnet, dass**, wenn die Vorsignatur $S_S$ nicht gültig ist, der Server des vertrauenswürdigen Dritten dem Unterzeichner den Fehler meldet und die ungültigen Vorsignaturen $S_S$ für den Unterzeichner erfasst und nach einer gegebenen aufeinanderfolgenden Anzahl von ungültigen Vorsignaturen die Verwendung der Signatur durch den Unterzeichner blockiert, indem er alle seine späteren Signaturanforderungen zurückweist.

6. Digitales Signaturverfahren nach Anspruch 2, **dadurch gekennzeichnet, dass** die Vorsignatur $S_S$ durch Anwendung einer probabilistischen kryptographischen Funktion an den Hashwert H(M) der digitalen Nachricht M und an den ersten privaten Schlüssel $K_S$ des Unterzeichners berechnet wird.

7. Digitales Signaturverfahren nach Anspruch 4, **dadurch gekennzeichnet, dass** der Überprüfungswert $V_S$ durch Anwendung einer Überprüfungsfunktion an den Hashwert H(M) der Nachricht M, an den zweiten privaten Schlüssel $K_C$ und an die Vorsignatur $S_S$ berechnet wird.

8. Digitales Signaturverfahren nach einem der vorhergehenden Ansprüche, **dadurch gekennzeichnet, dass** die für die Nachricht M mit Hilfe der zwei privaten Schlüssel $K_S$ und $K_C$ des Unterzeichners erhaltene Signatur S durch jeden Dritten überprüft werden kann, der das verwendete kryptographische Schema kennt und über den öffentlichen Schlüssel $K_P$ des Unterzeichners und die Nachricht M oder ihren Hashwert H(M) verfügt.

9. Digitales Signaturverfahren nach einem der vorhergehenden Ansprüche, **dadurch gekennzeichnet, dass** der öffentliche Schlüssel $K_P$ des Unterzeichners frei verteilt wird, insbesondere mit Hilfe eines digitalen Zertifikats, das in der Lage ist, den öffentlichen Schlüssel $K_P$ der Identität I des Unterzeichners zuzuordnen.

10. Digitales Signaturverfahren nach Anspruch 1, **dadurch gekennzeichnet, dass** die Berechnung der Signatur S durch den Server des vertrauenswürdigen Dritten durch eine Funktion durchgeführt wird, die den zweiten privaten Schlüssel $K_C$, den Hashwert H(M) der Nachricht und die vom Unterzeichner empfangene Vorsignatur $S_S$ verwendet.

11. Digitales Signaturverfahren nach einem der vorhergehenden Ansprüche, das das kryptographisch Schema RSA für die Signatur verwendet, **dadurch gekennzeichnet, dass** die Signaturberechnung die Schritte aufweist, die darin bestehen:

(41) für den Unterzeichner, Eingeben seines PIN-Codes oder seines Passworts P in seine Signaturvorrichtung;

(42) unverschlüsseltes Wiedergewinnen des RAS-Moduls n und Entschlüsseln seines privaten Exponenten $d_S$ mit Hilfe des Passworts P oder des PIN-Codes;

(43) Berechnen der Vorsignatur $S_S$ mit Hilfe der Signaturvorrichtung durch Anwendung einer probabilistischen Codierfunktion $E_S = ES(H(M))$, dann der modularen Exponentierungsfunktion RSA an die Nachricht M : $S_S = E_S^{ds} \bmod (n)$ ;

(44) Übertragen der Vorsignatur $S_S$ sowie des Hashwerts H (M) der zu signierenden Nachricht und der Identität I des Unterzeichners an den Server des vertrauenswürdigen Dritten;

(45) Wiedergewinnen des Moduls n, des Exponenten $d_C$ entsprechend dem zweiten privaten Schlüssel $K_C$ und des der Identität I des Unterzeichners zugeordneten öffentlichen Exponenten e durch den Server des vertrauenswürdigen Dritten, dann Rückgewinnen des Werts von $E_S$ mit Hilfe der modularen Exponentierungsfunktion RSA für den erzeugten Exponenten $(e.d_C)$ : $E_S = S_S^{(e.dc)} \bmod n$, und Anwendung der Überprüfungsfunktion an das Ergebnis der Entschlüsselung, um den Überprüfungswert $V_S = VS(H(M), E_S)$ zu berechnen;

(46) wenn VS falsch ist, Erfassen des Fehlers im Bereich des Servers des vertrauenswürdigen Dritten und Melden des Fehlers an den Unterzeichner;

(47) wenn VS richtig ist, Berechnen der Signatur S durch die modulare Exponentierungsfunktion RSA : S =

$S_S^{dc}$ mod n, und Übertragen der Signatur S an den Unterzeichner.

**12.** Digitales Signaturverfahren nach einem der Ansprüche 1 bis 10, die das kryptographische Schema El Gamal für die Signatur verwendet, **dadurch gekennzeichnet, dass** die Signaturberechnung die Schritte aufweist, die darin bestehen:

(61) für den Unterzeichner, Eingeben seines PIN-Codes oder seines Passworts P in seine Signaturvorrichtung;
(62) Wiedergewinnen des unverschlüsselten öffentlichen Schlüssels (p, g, y) mit Hilfe der Signaturvorrichtung und Entschlüsseln des privaten Exponenten $x_S$ mit Hilfe von P, dann Ziehen einer strikt positiven und ersten Zufallsnummer $k_S$ mit (p-1) und Berechnen des Werts: $r_S = g^{ks}$ mod p;
(63) Übertragen des Werts $r_S$ sowie der Identität I des Unterzeichners an den Server des vertrauenswürdigen Dritten;
(64) Wiedergewinnen des öffentlichen Schlüssels (p, g, y) und des zweiten privaten Schlüssels ($y_S$, $x_C$), die der Identität I zugeordnet sind, durch den Server des vertrauenswürdigen Dritten, dann Ziehen einer strikt positiven und ersten Zufallsnummer $k_C$ mit (p-1), und Berechnen des Werts: $r_C = g^{kc}$ mod p dann des Produkts r = ($r_S$.$r_C$) mod p;
(65) Übertragen des Werts $r_C$ an die Signaturvorrichtung des Unterzeichners;
(66) Berechnen des Produkts r = ($r_S$.$r_C$) mod p, dann der Vorsignatur: $S_S = (x_S. H(M) - r.k_S)$ mod (p-1) durch die Signaturvorrichtung;
(67) Übertragen des Werts der Vorsignatur $S_S$ sowie des Hashwerts H(M) der Nachricht an den Server des vertrauenswürdigen Dritten;
(68) Überprüfen der so empfangenen Vorsignatur durch den Server des vertrauenswürdigen Dritten mittels Durchführung der folgenden Berechnungen: V1 = (ysH(M)) mod p; V2 = (gSs.rsr) mod p; der Wert von Vs Signaturüberprüfung ist richtig, wenn gilt (V1 = V2) und im gegenteiligen Fall falsch;
(69) wenn VS falsch ist, erfasst der Server des vertrauenswürdigen Dritten den Fehler und meldet den Fehler dem Unterzeichner;
(70) wenn VS richtig ist, führt der Server des vertrauenswürdigen Dritten die Berechnung der Signatur S folgendermaßen durch: $S_C = (x_C.H(M) - r.k_C)$ mod (p-1); dann: S = ($S_S+S_C$) mod (p-1).

## Claims

**1.** Method of digital signature of a message M by a signatory having an identity I and making use of a signature device, said method using a public-key cryptography scheme and being **characterized in that** the signatory makes use of a public key $K_p$ and of two private keys $K_s$ and $K_c$, the second private key $K_c$ being deposited with a trusted third party, and **in that** it comprises, for each signature operation, two complementary steps, each carried out with a distinct private key, namely:

- the calculation by the signatory of a pre-signature $S_s$ of the message M with the aid of his first private key $K_s$, and then the transmission of the message M and of the pre-signature $S_s$ to the trusted third party;
- the verification by the trusted third party of the pre-signature $S_s$, followed by the calculation by the cosignatory third party of a signature S of the message M, with the aid on the one hand of the second private key $K_c$ of the signatory deposited with the trusted third party, and on the other hand of said pre-signature $S_s$ previously calculated by the signatory.

**2.** Method of digital signature according to Claim 1, **characterized in that** it comprises, prior to the signature steps, a step of generating and storing the two private keys $K_s$, $K_c$ and the public key $K_p$ of the signatory, consisting in:

- the generation by the signatory of his first pre-signature private key $K_s$;
- the generation of the second private key $K_c$, this key being generated, according to the cryptography scheme used, either by the signatory alone, or by the trusted third party with the aid of elements that have been transmitted to him by the signatory;
- the generation of the public key $K_p$ of the signatory, this key being generated, according to the cryptography scheme used, either by the signatory alone, or by the trusted third party with the aid of elements that have been transmitted to him by the signatory;
- the secure transmission to the trusted third party of the public key $K_p$ and of his second private key $K_c$ or of the elements allowing their generation;
- the encryption of the first private key $K_s$ of the signatory and the storage of this encrypted private key as well as of the public key $K_p$ in a keys file checked by the signatory.

3. Method of digital signature according to Claim 2, **characterized in that** the second private key $K_c$ of the signatory of identity I and used by the trusted third party third party with the aid of a server and of a signature verification algorithm, is determined as a function of the cryptography scheme used, of the first private key $K_s$ and of the public key $K_p$ of the signatory.

4. Method of digital signature according to Claim 2, **characterized in that** the pre-signing of a message M by the signatory comprises the following steps:

   - identification of the signatory at his signature device, with the aid of a password or of a PIN code;
   - decryption by the signature device of the signatory of the content of the keys file with the aid of said password or of said PIN code, and obtaining of the first private key $K_s$;
   - calculation by the signature device of the signatory of a pre-signature $S_s$ with the aid of his first private key $K_s$ and transmission to the server of the trusted third party of this pre-signature $S_s$, of the message to be signed M or of its hash H(M), and of the identity I of the signatory;
   - retrieval by the server of the trusted third party of the second private key $K_c$ of the signatory, with the aid of the identity I of the latter;
   - verification by the server of the trusted third party with the aid of the second private key $K_c$ and of the public key $K_p$ of the signatory, of the validity of said pre-signature $S_s$, by calculating a verification value $V_s$ which may be true, indicating that the pre-signature $S_s$ is valid, or false, indicating that the pre-signature $S_s$ is false;
   - if said pre-signature $S_s$ is valid, the server of the trusted third party calculates with the aid of the second private key $K_c$ of the signatory of identity I, the signature S.

5. Method of digital signature according to Claim 2, **characterized in that** if the pre-signature $S_s$ is not valid, the server of the trusted third party notifies the error to the signatory and logs the pre-signatures $S_s$ invalid for the signatory and, after a given consecutive number of invalid pre-signatures, blocks the use of the signature by the signatory by rejecting all his subsequent signature requests.

6. Method of digital signature according to Claim 2, **characterized in that** the pre-signature $S_s$ is calculated by applying a probabilistic cryptographic function to the hash H(M) of the digital message M and to the first private key $K_s$ of the signatory.

7. Method of digital signature according to Claim 4, **characterized in that** the verification value $V_s$ is calculated by applying a verification function to the hash H(M) of the message M, to the second private key $K_c$ and to the pre-signature $S_s$.

8. Method of digital signature according to any one of the preceding claims, **characterized in that** the signature S obtained for the message M with the aid of the two private keys $K_s$ and $K_c$ of the signatory may be verified by any third party knowing the cryptographic scheme used and making use of the public key $K_p$ of the signatory and of the message M or of its hash H(M).

9. Method of digital signature according to any one of the preceding claims, **characterized in that** the public key $K_p$ of the signatory is freely distributed, in particular with the aid of a digital certificate able to associate the public key $K_p$ with the identity I of the signatory.

10. Method of digital signature according to Claim 1, **characterized in that** the calculation of the signature S by the server of the trusted third party is carried out by a function using the second private key $K_c$, the hash H(M) of the message and the pre-signature $S_s$ received from the signatory.

11. Method of digital signature according to any one of the preceding claims, using the RSA cryptographic scheme for the signature, **characterized in that** the signature calculation comprises the steps consisting in:

   (41) in respect of the signatory, entering his PIN code or his password P on his signature device;
   (42) retrieving the RSA modulus n as plaintext and decrypting his private exponent $d_s$ with the aid of the password P or of the PIN code;
   (43) calculating the pre-signature $S_s$ with the aid of the signature device, by applying a probabilistic encoding function $E_s = ES(H(M))$ and then the RSA modular exponentiation function to the message M: $S_s = E_s^{ds} \bmod (n)$;

(44) transmitting said pre-signature $S_s$ to the server of the trusted third party along with the hash H(M) of the message to be signed and the identity I of the signatory;

(45) retrieval by the server of the trusted third party of the modulus n, of the exponent $d_c$ corresponding to the second private key $K_c$ and of the public exponent **e** associated with the identity I of the signatory, and then recovery of the value of $E_s$ with the aid of the RSA modular exponentiation function for the exponent produced $(e \cdot d_c)$ : $E_s = S_s^{(e \cdot dc)}$ mod n, and application of the verification function to the result of the decryption so as to calculate the verification value $V_s = VS (H(M), E_s)$ ;

(46) if VS is false, logging the error at the level of the server of the trusted third party and notifying the error to the signatory;

(47) if VS is true, calculating the signature S by the RSA modular exponentiation function: $S = S_s^{dc}$ mod n, and transmitting the signature S to the signatory.

**12.** Method of digital signature according to any one of Claims 1 to 10, using the El-Gamal cryptographic scheme for the signature, **characterized in that** the signature calculation comprises the steps consisting in:

(61) in respect of the signatory, entering his PIN code or his password P on his signature device;

(62) retrieving with the aid of the signature device, the public key (p, g, y) as plaintext and decrypting the private exponent $x_s$ with the aid of P, and then drawing a strictly positive random number $k_s$ prime to (p-1) and calculating the value: $r_s = g^{ks}$ mod p;

(63) transmitting the value $r_s$ to the server of the trusted third party along with the identity I of the signatory;

(64) retrieval by the server of the trusted third party of the public key (p, g, y) and of the second private key $(y_s, x_c)$ associated with the identity I, and then drawing a strictly positive random number $k_c$ prime to (p-1), and calculating the value: $r_c = g^{kc}$ mod p and then the product $r = (r_s \cdot r_c)$ mod p;

(65) transmitting the value $r_c$ to the signature device of the signatory;

(66) calculation by the signature device of the product $r = (r_s \cdot r_c)$ mod p and then of the pre-signature: $S_s = (x_s \cdot H(M) - r \cdot k_s)$ mod (p - 1);

(67) transmitting the value of the pre-signature $S_s$ to the server of the trusted third party along with the hash H(M) of the message;

(68) verification by the server of the trusted third party of the pre-signature thus received by carrying out the following calculations: V1 = (ysH(M)) mod p; V2 = (gSs . rsr) mod p; the value of Vs signature verification is true if (V1 = V2) and false in the converse case;

(69) if VS is false, the server of the trusted third party logs the error and notifies the error to the signatory;

(70) if VS is true, the server of the trusted third party carries out the calculation of the signature S as follows: $S_c = (x_c \cdot H(M) - r \cdot k_c)$ mod (p - 1) ; and then: $S = (S_s + S_c)$ mod (p - 1).

**1**

**3**

**7**

**5**

Dispositif du Signataire

Composant
Logiciel de
Génération
de Clé

Composant
Logiciel de
Signature

Fichier
de Clés

**15**

Echange de
Données

Affichage
Saisie

**11**

**13**

Serveur du Tiers de
Confiance

SIGNATAIRE

**9**

**Figure 1 : Représentation Schématique des Composants de la Solution**

Signataire

Identité : $I$

Message à Signer : $M$

Dispositif de Signature

Serveur du Tiers de Confiance

(21) Saisie PIN ou Mot de Passe $P$

(22) Déchiffrement avec $P$ de $K_s$

(23) Calcul Pré-signature $S_s = S_1 (H(M), K_s)$

(24) Envoi $H(M), I, S_s$

(25) Vérification $V_s = V_1 (H(M), S_s, K_c)$

(26a) [$V_s$ faux] Comptabilise Erreur

(26b) [Vs vrai] Calcule Signature
$S = S_2 (H(M), S_s, K_c)$

(27a) [$V_s$ faux] Notifie

(27b) [$V_s$ vrai] Envoi $S$

(28) Notifie

**Figure 2 : Processus Générique de Calcul de Signature**

Signataire

Identité : $I$

Dispositif de Signature

Serveur Tiers de Confiance

(31) Saisie PIN ou Mot de Passe $P$

(32) Tirage module $n$ et calcul de $\varphi(n)$

(33) Calcul des exposants $e, d_s, d_c$

(34) Envoi $I, n, e, d_c$

(35) Stocke $I, n, e, d_c$

(36) Acquitte

(37) Stocke $n, e$ en clair

Stocke $d_s$ chiffré par $P$

(38) Notifie

**Figure 3 : Processus de Génération des Clés RSA**

Signataire

Identité : $I$

Message à Signer : $M$

Dispositif de Signature

Serveur Tiers de Confiance

(41) Saisie PIN ou Mot de Passe $P$

(42) Récupère $n$. Déchiffre $d_s$

(43) Pré-signature : $E_s = ES\ (H\ (M))$

$$S_s = E_s{}^{d_s}\ mod\ (n)$$

(44) Envoi $H(M)$, $I$, $S_s$

(45) Vérification: $E_s = S_s{}^{(e\ .\ d_c)}\ mod\ (n)$

$$V_s = VS\ (H(M),\ E_s)$$

(46a) [$V_s$ faux] Comptabilise Erreur

(46b) [$V_s$ vrai] Signature:

$$S = S_s{}^{d_c}\ mod\ (n)$$

(47a) [$V_s$ faux] Notifie

(47b) [$V_s$ faux] Envoi $S$

(48) Notifie

**Figure 4 : Processus de Calcul de Signature RSA**

Signataire

Identité : $I$

Dispositif
de Signature
$(p, g)$

Serveur
Tiers de
Confiance
$(p, g)$

(51) Saisie PIN
ou Mot de Passe $P$

(52) Tirage $x_s$ et calcul de $y_s = g^{x_s} \bmod p$

(53) Envoi $I$, $y_s$

(54) Tirage $x_c$ et calcul de
$$y = (y_s \cdot g^{x_c}) \bmod p$$

(55) Stocke $I$, $x_c$, $y_s$,

(56) Envoi $y$

(57) Stocke $y$ en clair
Stocke $x_s$ chiffré par $P$

(58) Notifie

**Figure 5 : Processus de Génération des Clés El-Gamal / Harn**

Signataire
Identité : $I$

Dispositif
de Signature
$(p, g)$

Serveur
Tiers de
Confiance
$(p, g)$

(61) Saisie PIN
ou Mot de Passe $P$

(62) Déchiffre $x_s$ / Génère $k_s$
Calcul $r_s = g^{k_s} \bmod p$

(63) Envoi $I, r_s$

(64) Génère $k_c$
Calcul $r_c = g^{k_c} \bmod p$
$r = (r_s . r_c) \bmod p$

(65) Envoi $r_c$

(66) Calcul $r = (r_s . r_c) \bmod p$
$S_s = (x_s . H(M) - r . k_s) \bmod (p-1)$

(67) Envoi $S_s, H(M)$

(68) Vérification
$v1 = (y_s^{H(M)}) \bmod p$
$v2 = (g^{S_s} . r_s^r) \bmod p$
$V_s = $ vrai si $(v1 = v2)$ sinon faux

(69a) $[V_s$ faux$]$ Comptabilise Erreur

(69b) $[V_s$ vrai$]$ Signature:
$S_c = (x_c . H(M) - r . k_c) \bmod (p-1)$
$S = (S_s + S_c) \bmod (p-1)$

(70a) $[V_s$ faux$]$ Notifie

(70b) $[V_s$ vrai$]$ Envoi $S$

(71) Notifie

**Figure 6 : Processus de Calcul de Signature El-Gamal / Harn**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6178058 B
- US 4868877 A, FISCHER ADDISON
- US 2007208944 A1, PAVLICIC MILADIN
- US 2001016911 A1, OBANA SATOSHI
- GB 2337145 A

**Littérature non-brevet citée dans la description**

- FIPS 46-3, Data Encryption Standard (DES). *National Institute of Standards and Technology (NIST),* Octobre 1999
- FIPS 180-2, Secure Hash Standard (SHS). *National Institute of Standards and Technology (NIST),* Août 2002
- FIPS 186-3. Digital Signature Standard (DSS). *National Institute of Standards and Technology (NIST),* Mars 2006
- FIPS 197. Advanced Encryption Standard (AES). *National Institute of Standards and Technology (NIST),* Novembre 2001
- PKCS #1 v2.1: RSA Encryption Standard. *RSA Laboratories,* Juin 2002
- PKCS #1 v2.0 Amendment 1: Multi-Prime RSA. *RSA Laboratories,* Juillet 2000
- PKCS #5 v2.0 Password-Based Cryptography Standard. *RSA Laboratories,* Mars 1999
- PKCS #11 v2.20: Cryptographie Token Interface Standard. *RSA Laboratories,* Juin 2004
- Cryptobytes. RSA Laboratories. Winter/Spring, 2002, vol. 5
- **T. ELGAMAL.** A public key cryptosystem and a signature scheme based on discrete logarithms. *IEEE Trans. Inform. Theory,* 1985, vol. 31 (4), 469-472
- **L. HAM.** Digital Multisignature with Distinguished Signing Authorities. *IEE Electronics Letters,* 1999, vol. 35 (4), 294-295
- **B. SCHNEIER.** Applied Cryptography. 1996